# EUROPÄISCHE PATENTSCHRIFT

(11) **EP 2 918 357 B1**
(45) Veröffentlichungstag und Bekanntmachung des Hinweises auf die Patenterteilung: **27.04.2016**
(21) Anmeldenummer: 14158483.9
(22) Anmeldetag: 10.03.2014
(51) Int. Cl.: B21J 15/04, B21J 15/10, B21J 15/26

(54) **Blindnietsetzgerät**
Blind rivet setting device
Appareil de pose de rivets aveugles

(43) Veröffentlichungstag der Anmeldung: 16.09.2015
(73) Patentinhaber: GESIPA Blindniettechnik GmbH, 64546 Mörfelden-Walldorf (DE)
(72) Erfinder: Gärtner, Richard, Dr., 64546 Mörfelden-Walldorf (DE); Wille, Lothar, 64546 Mörfelden-Walldorf (DE); Leinweber, Michael, 64546 Mörfelden-Walldorf (DE); Schumann, Tobias, 64546 Mörfelden-Walldorf (DE)
(74) Vertreter: Knoblauch, Andreas

(56) Entgegenhaltungen:
- EP-A2- 1 023 957
- WO-A2-2012/025521
- US-A- 2 428 165

## Beschreibung

Die Erfindung betrifft ein Blindnietsetzgerät mit einem Gehäuse, einer Zugeinrichtung, die zumindest teilweise in dem Gehäuse angeordnet ist, und einem Antrieb, der in eine Zugrichtung und in eine entgegengesetzt zur Zugrichtung gerichtete Rückstellrichtung auf die Zugeinrichtung wirkt.

Ein derartiges Blindnietsetzgerät ist beispielsweise aus DE 41 26 602 A1 bekannt.

Unter "Blindnietsetzgerät" soll im Folgenden ein Gerät verstanden werden, das zum Setzen von Blindnieten, Blindnietmuttern und allgemein Blindnietbefestigern verwendet werden kann. Zum Setzen eines derartigen Blindnietbefestigers wird ein Zugdorn des Blindnietbefestigers durch eine stirnseitige Öffnung in das Gehäuse eingeführt. Der Blindnietbefestiger wird dann durch eine Öffnung in einem Bauelement geführt, bis sein Setzkopf an dem Bauelement anliegt. Wenn der Antrieb die Zugeinrichtung in Zugrichtung betätigt, wird der Zugdorn von der Zugeinrichtung ergriffen und in Zugrichtung gezogen, wobei das Gehäuse den Setzkopf gegen das Bauelement drückt. Dadurch bildet sich auf der vom Setzkopf abgewandten Seite des Bauelements ein Schließkopf aus. Wenn der Schließkopf ausgebildet und der Setzvorgang somit praktisch beendet ist, treibt der Antrieb die Zugeinrichtung in die Rückstellrichtung an, so dass sie wieder in Richtung auf die stirnseitige Öffnung des Gehäuses gefahren wird. Der Zugdorn kann dann aus dem Gehäuse und aus der Zugeinrichtung entnommen werden und das Blindnietsetzgerät steht für einen neuen Setzvorgang zur Verfügung.

Um eine möglichst hohe Produktivität zu erreichen, ist man bemüht, die Bewegung der Zugeinrichtung während eines Setzvorgangs und auch die Rückstellbewegung der Zugeinrichtung möglichst schnell ablaufen zu lassen. Entsprechend leistungsstark ist dann der Antrieb ausgebildet. Zur automatischen Steuerung der Bewegung, insbesondere der Rückstellbewegung der Zugeinrichtung, verwendet man einen oder mehrere Sensoren.

Die Bewegung der Zugeinrichtung in Rückstellrichtung muss mit einer gewissen Genauigkeit erfolgen. Wenn die Zugeinrichtung nicht weit genug in Rückstellrichtung bewegt wird, dann wird unter Umständen eine Greifeinrichtung nicht weit genug geöffnet, um einen abgerissenen Zugdorn zu entfernen oder um einen neuen Zugdorn einführen zu können. Wird hingegen die Zugeinrichtung zu weit bewegt, dann kann sie das Gehäuse beschädigen.

Auch bei einer Steuerung, die die Bewegung der Zugeinrichtung mit der erforderlichen Genauigkeit steuert, können Probleme auftreten. Diese ergeben sich beispielsweise dadurch, dass beim Setzen eines Blindnietbefestigers Abrieb entstehen kann, der sich zwischen dem Gehäuse und der Zugeinrichtung ansammelt. Hier kann sich ein regelrechter "Pfropf" bilden. Wenn die Zugeinrichtung dann in ihre Ausgangslage zurückbewegt wird, dann kann die die vom Antrieb über die Zugeinrichtung und den Pfropf auf das Gehäuse ausgeübte Kraft so groß sein, dass sich wiederum Beschädigungen ergeben, insbesondere am Gehäuse.

Der Erfindung liegt die Aufgabe zugrunde, das Risiko von Beschädigungen zu vermindern.

Diese Aufgabe wird bei einem Blindnietsetzgerät der eingangs genannten Art dadurch gelöst, dass das Gehäuse und/oder die Zugeinrichtung in Rückstellrichtung nach Überschreiten einer vorbestimmten Kraft zwischen einer ersten Länge und einer zweiten Länge veränderbar sind.

Mit dieser Lösung vermeidet man eine Beschädigung dadurch, dass die Zugeinrichtung bei Überschreiten einer vorbestimmten Kraft ihre Länge verkürzt oder das Gehäuse bei Überschreiten einer vorbestimmten Kraft seine Länge verändert. Natürlich kann man auch beide Maßnahmen kombinieren. Durch die Längenveränderung ist es möglich, das Problem zu entschärfen, das sich ansonsten bei der Rückstellbewegung durch Aufbringen einer übermäßig großen Kraft zwischen dem Gehäuse und der Zugeinrichtung ergeben würde. Wenn sich bei der Rückstellbewegung der Zugeinrichtung beispielsweise durch den oben genannten Pfropf eine Situation ergibt, bei der die Zugeinrichtung sich nicht mehr bis in ihre Ausgangslage zurückbewegen kann, weil der angesammelte Schmutz dies verhindert, dann wird kein das Gehäuse beschädigender Druck mehr erzeugt, sondern die Zugeinrichtung wird gestaucht oder das Gehäuse wird verlängert. Der Benutzer kann dann Maßnahmen treffen, um das Problem wieder zu beseitigen, beispielsweise den Schmutz zu entfernen. In Zugrichtung ist die Länge jedoch unverändert, d.h. es ergibt sich bei einer Bewegung der Zugeinrichtung in Zugrichtung genau die gewünschte Kinematik, also das Zusammenwirken zwischen Gehäuse und Zugeinrichtung, die zur Ausbildung des Schließkopfes des Blindnietbefestigers führt.

Vorzugsweise weist die Zugeinrichtung Klemmbacken auf, die durch eine Druckfeder in ein Futtergehäuse hinein belastet sind. Je weiter die Klemmbacken in das Futtergehäuse hineinbewegt werden, desto weiter nähern sie sich radial an. Die Druckfeder wird also verwendet, um eine Klemmkraft zu erzeugen, mit der die Klemmbacken einen Zugdorn erfassen können, der in die Zugeinrichtung eingeschoben worden ist. Die Funktion der Druckfeder bleibt unbeeinflusst von der Möglichkeit der Längenänderung.

Vorzugsweise weist das Gehäuse ein Mundstück auf, wobei die Klemmbacken in einem Ruhezustand durch das Mundstück in eine geöffnete Stellung verlagert sind, wenn die erste Länge vorliegt, und nicht in die geöffnete Stellung verlagert sind, wenn die zweite Länge vorliegt. Die Klemmbacken sind üblicherweise in einem Futtergehäuse angeordnet, das dann, wenn es in Zugrichtung auf die Klemmbacken wirkt, die Klemmbacken senkrecht zur Zugrichtung aufeinander zu bewegt, so dass die Klemmbacken einen Zugdorn eines Blindnietbefestigers festhalten können. Die Klemmbacken werden dabei üblicherweise durch die Kraft einer Feder in das Futtergehäuse hineingedrückt. Das Mundstück ragt in das Futtergehäuse hinein, wenn sich die Zugeinrichtung in ihrer Ausgangsstellung befindet, d.h. in der am weitesten in Rückstellrichtung bewegten Position, so dass die Klemmbacken im Futtergehäuse eine kleine Strecke zurückgeschoben worden sind und sich somit in einer "geöffneten Stellung" befinden, in der ein Zugdorn aus den Klemmbacken herausgenommen oder in die Klemmbacken eingesetzt werden kann. Wenn sich eine derart geschilderte Verschmutzung oder Verunreinigung zwischen Gehäuse und Zugeinheit aufbaut, hat die geschilderte Ausgestaltung den Vorteil, dass der Benutzer des Blindnietsetzgeräts auf einen Wartungsbedarf hingewiesen wird. Wenn er nämlich nicht mehr in der Lage ist, einen Zugdorn eines Blindnietbefestigers durch die stirnseitige Öffnung des Gehäuses in die Zugeinrichtung einzuführen, ist es eine natürliche Reaktion, dass der Bediener annimmt, es läge eine Verschmutzung oder dergleichen vor. In diesem Fall wird er das Gehäuse teilweise demontieren, um die Verschmutzung entfernen zu können. Damit ist im Grunde das Problem erledigt. In vielen Fällen wird der Bediener auch schon dadurch auf den Fehlerfall aufmerksam gemacht, dass er den Zugdorn eines gesetzten Blindnietbefestigers nicht mehr ohne weiteres aus dem Gehäuse herausziehen kann.

Vorzugsweise liegt ein Unterschied zwischen der ersten Länge und der zweiten Länge im Bereich von 1 bis 5 mm. Die Längenänderung ist also relativ klein. Sie reicht aber aus, um zu verhindern, dass übermäßig große Kräfte zwischen der Zugeinrichtung und dem Gehäuse wirken.

Vorzugsweise weist die Zugeinrichtung ein erstes Zugelement und ein zweites Zugelement auf, wobei das erste Zugelement und das zweite Zugelement in Zugrichtung formschlüssig in Eingriff stehen und in Rückstellrichtung ein elastisches Element zwischen dem ersten Zugelement und dem zweiten Zugelement wirkt. Durch diese Ausbildung ist es möglich, die zum Ausbilden des Schließkopfes des Blindnietbefestigers notwendige Kraft durch einen durchgehenden Zugstrang vom Antrieb auf den Zugdorn zu übertragen. Durch den formschlüssigen Eingriff zwischen dem ersten und dem zweiten Zugelement ist eine Ausweichbewegung nicht möglich. Anders sieht es bei einer Bewegung in die entgegengesetzte Richtung aus. Hier wirkt das zweite Zugelement gegebenenfalls über ein oder mehrere weitere Teile über ein elastisches Element auf das erste Zugelement. Wenn also das erste Zugelement am Gehäuse zum Anschlag kommt, beispielsweise auch unter Zwischenlage einer Ansammlung von Verschmutzungspartikeln, dann kann sich das zweite Zugelement weiter bewegen, in dem das elastische Element komprimiert wird.

Vorzugsweise ist das elastische Element als Wellfeder oder anderer elastomerer Körper ausgebildet. Der elastomere Körper kann beispielsweise als Ring ausgebildet sein. Damit ergibt sich um die Zugeinrichtung herum ein gleichmäßiger Widerstand gegen ein Zusammendrücken, so dass das Risiko, dass die Zugeinrichtung quer zur Zugrichtung verformt wird, relativ gering ist.

Bevorzugterweise weist das erste Zugelement einen ersten Absatz mit einer senkrecht zur Zugrichtung gerichteten ersten Fläche auf und das zweite Zugelement weist einen zweiten Absatz mit einer senkrecht zur Zugrichtung gerichteten zweiten Fläche auf, wobei das elastische Element die erste Fläche und die zweite Fläche gegeneinander belastet. Der Begriff "senkrecht" ist hier nicht im mathematisch exakten Sinn zu verstehen. Die beiden Flächen müssen lediglich in der Lage sein, eine Kraft in Zugrichtung zu übertragen. Die Zugeinrichtung hat also bei Bewegung in Zugrichtung immer ihre maximale Länge. Bei einer Bewegung in die Rückstellrichtung kann jedoch das elastische Element komprimiert werden, so dass die Länge der Zugeinrichtung vermindert werden kann.

Alternativ oder zusätzlich weist das Gehäuse ein erstes Gehäuseteil und ein zweites Gehäuseteil auf, wobei das erste Gehäuseteil in Rückstellrichtung gegenüber dem zweiten Gehäuseteil verlagerbar ist. Mit dieser Ausgestaltung kann die Länge des Gehäuses verlängert werden, so dass auch dann, wenn eine Verschmutzung zwischen der Zugeinrichtung und dem Inneren des Gehäuses, genauer gesagt, einer inneren Stirnseite des Gehäuses, vorhanden ist, eine Beschädigung des Gehäuses oder der Zugeinrichtung dadurch vermieden werden kann, dass das erste Gehäuseteil gegenüber dem zweiten Gehäuseteil verlagert wird und dadurch die Länge des Gehäuses vergrößert wird.

Hierbei ist bevorzugt, dass eines der beiden Gehäuseteile eine Markierung aufweist, die sichtbar ist, wenn die zweite Länge vorliegt und nicht sichtbar ist, wenn die erste Länge vorliegt. Die beiden Gehäuseteile sind ineinander teleskopierend angeordnet. Zweckmäßigerweise ist die Markierung dann an dem Gehäuseteil angebracht, das in das andere Gehäuseteil eingesteckt ist.

Vorzugsweise stehen das erste Gehäuseteil und das zweite Gehäuseteil über eine Rastverbindung in Eingriff. Die Rastverbindung rastet ein, wenn das erste Gehäuseteil in das zweite Gehäuseteil hineingeschoben wird, so dass das Gehäuse dann seine "Soll-Länge" aufweist. Mit dieser Soll-Länge können Blindnietbefestiger gesetzt werden. Wenn sich dann bei einer Rückstellbewegung der Zugeinrichtung die Situation ergibt, dass die Zugeinrichtung mit dem Gehäuse kollidieren sollte, beispielsweise aufgrund eines Defekts an einem Sensor, einer fehlerhaften Programmierung oder der Ansammlung von Schmutz, dann wird das erste Gehäuseteil nach Überwindung einer zum Lösen der Rastverbindung erforderlichen Kraft aus dem zweiten Gehäuseteil herausgeschoben.

Vorzugsweise weist die Rastverbindung mindestens ein Federelement auf, das mit einem der Gehäuseteile verbunden ist und mit dem anderen der Gehäuseteile kraftschlüssig in Eingriff steht. Das Federelement kann beispielsweise in eine Nut einrasten. Zum Lösen der Rastverbindung muss eine Kraft aufgebracht werden, die das Federelement aus der Nut herausdrückt.

Hierbei ist bevorzugt, dass das Federelement als Federbügel ausgebildet ist. Ein Federbügel ist ein relativ einfach ausgebildetes Konstruktionselement, das man leicht zum Herstellen einer Rastverbindung verwenden kann.

Die Erfindung wird im Folgenden anhand von bevorzugten Ausführungsbeispielen in Verbindung mit der Zeichnung beschrieben. Hierin zeigen:
- Fig. 1: eine erste Ausführungsform eines Blindnietsetzgeräts in Teilansicht,
- Fig. 2: einen Schnitt D-D durch einen Teil eines Blindnietsetzgeräts nach Fig. 3,
- Fig. 3: eine Seitenansicht eines Teils eines Blindnietsetzgeräts,
- Fig. 4: einen Schnitt E-E nach Fig. 2,
- Fig. 5: einen Teil des Blindnietsetzgeräts in perspektivischer Darstellung und
- Fig. 6: den Teil des Blindnietsetzgeräts in Explosionsansicht.

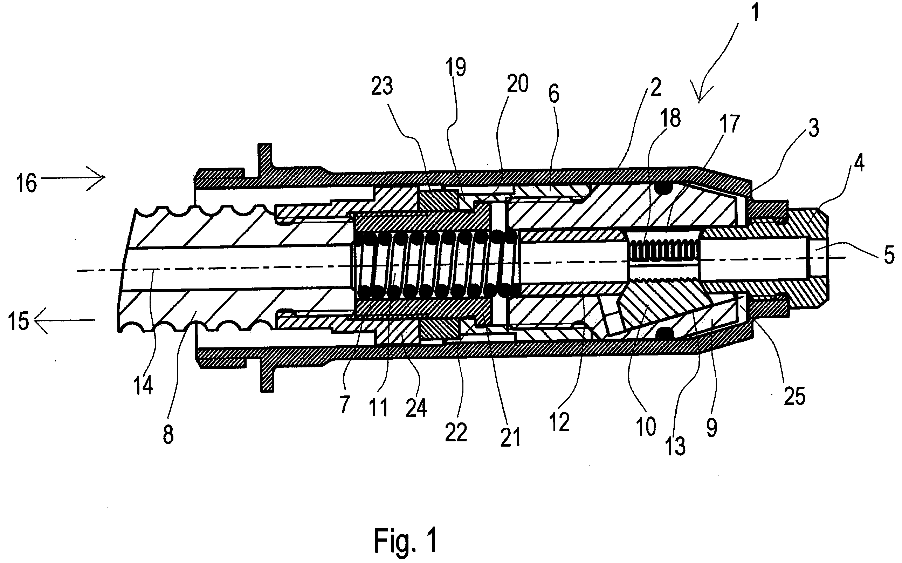

Fig. 1 zeigt einen Teil eines Blindnietsetzgeräts 1 mit einem Gehäuse 2, das im hier dargestellten Bereich als Stahlhülse ausgebildet ist. Das Gehäuse 2 weist eine Stirnseite 3 auf, in die ein Mundstück 4 eingeschraubt ist. Das Mundstück 4 weist eine zentrische Öffnung 5 auf, durch die ein Zugdorn eines Blindnietbefestigers in das Gehäuse 2 eingesetzt werden kann.

Im Gehäuse 2 ist eine Zugeinrichtung angeordnet, die ein erstes Zugelement 6 und ein zweites Zugelement 7 aufweist. Das zweite Zugelement 7 steht über ein Gegenstück 24 mit einer Antriebseinrichtung 8 in Verbindung, von der hier eine Gewindespindel zu erkennen ist. In an sich bekannter Weise steht die Gewindespindel mit einer Gewindemutter oder einer Kugelgewindemutter in Verbindung, die ihrerseits von einem elektrischen, pneumatischen oder hydraulischen Antrieb angetrieben werden kann.

Das erste Zugelement 6 wirkt auf ein Futtergehäuse 9. Im Futtergehäuse 9 sind mehrere Klemmbacken 10 angeordnet, die durch eine Druckfeder 11 in das Futtergehäuse 9 hineinbelastet sind. Zwischen der Druckfeder 11 und den Klemmbacken 10 kann eine Distanzhülse 12 vorgesehen sein.

Das Futtergehäuse 9 weist Stützflächen 13 auf, die zu einer Mittelachse 14 geneigt sind. An den Stützflächen 13 liegen die Klemmbacken 10 an.

Das Futtergehäuse 9 kann über die beiden Zugelemente 6, 7, das Gegenstück 24 und die Antriebseinrichtung 8 in eine Zugrichtung 15 bewegt werden, um einen Blindnietbefestiger zu setzen, also an dem Blindnietbefestiger einen Schließkopf auszubilden. Das Futtergehäuse 9 kann auch in eine Rückstellrichtung 16 bewegt werden, wenn der Setzvorgang beendet ist, um wieder die in Fig. 1 dargestellte Ausgangsposition einzunehmen.

In der in Fig. 1 dargestellten Ausgangsposition ist das Futtergehäuse 9 relativ weit auf die Stirnseite 3 des Gehäuses 2 hin verlagert worden, so dass die Klemmbacken 10 am Mundstück 4 zur Anlage kommen. Die Klemmbacken 10 werden durch das Mundstück 4 gegen die Kraft der Druckfeder 11 etwas in Richtung auf die Druckfeder 11 hin verlagert, so dass sie sich an den Stützflächen 13 entlang radial nach außen bewegen können. Dadurch wird ein Aufnahmeraum 17 zwischen den Klemmbacken 10 vergrößert, so dass ein Zugdorn eines Blindnietbefestigers leicht eingeführt oder entnommen werden kann.

Wenn hingegen die Antriebseinrichtung 8 das Futtergehäuse 9 in Zugrichtung 15 bewegt, dann kommen die Klemmbacken 10 von dem Mundstück 4 frei und werden durch die Druckfeder 11 an den Stützflächen 13 radial nach innen bewegt, so dass sie den Zugdorn erfassen können. Hierzu weisen die Klemmbacken 10 an ihrer radialen Innenseite eine Oberflächengeometrie 18 auf, die einen Eingriff zwischen den Klemmbacken 10 und dem Zugdorn verbessert, beispielsweise eine Verzahnung, eine Riffelung oder dergleichen.

Wenn der Setzvorgang beendet ist, dann bewegt die Antriebseinrichtung 8 das Futtergehäuse 9 wieder in Richtung auf die Stirnseite 3, so dass sich die Futterbacken 10 öffnen, also in eine geöffnete Stellung verlagern, und den Zugdorn freigeben.

Das erste Zugelement 6 steht mit dem zweiten Zugelement 7 in Zugrichtung formschlüssig in Eingriff. Hierzu weist das erste Zugelement 6 einen ersten Absatz 19 auf, der im vorliegenden Fall radial nach innen weist und eine etwa senkrecht zur Mittelachse 14 gerichtete erste Fläche 20 aufweist. In ähnlicher Weise weist das zweite Zugelement 7 einen Absatz 21 auf, der radial nach innen gerichtet ist und eine zweite Fläche 22 aufweist, die ebenfalls etwa senkrecht zur Mittelachse 14 gerichtet ist. Der Begriff "senkrecht" ist hier nicht im mathematisch engen Sinne zu verstehen. Wenn die beiden Flächen 20, 22 aneinander anliegen, müssen sie jedoch in der Lage sein, eine Kraft in Zugrichtung 15 zu übertragen.

Ein elastisches Element 23, vorzugsweise eine Wellfeder, umgibt ringförmig das zweite Zugelement 7. Das elastische Element 23 ist zwischen dem ersten Absatz 19 des ersten Zugelements 6 und dem Gegenstück 24 angeordnet, das auf das zweite Zugelement 7 aufgeschraubt oder auf andere Weise mit dem zweiten Zugelement 7 verbunden ist. Das elastische Element 23 ist unter Vorspannung spielfrei zwischen dem Gegenstück 24 und dem ersten Absatz 19 angeordnet, so dass der erste Absatz 19 mit seiner ersten Fläche 20 spielfrei an der zweiten Fläche 22 des zweiten Absatzes 21 anliegt. Das Gegenstück 24 ist hier als einzelnes Element dargestellt. Es könnte jedoch auch einteilig mit dem zweiten Zugelement 7 oder der Antriebseinrichtung 8 ausgebildet sein oder aus mehreren Teilen bestehen.

Wenn die Antriebseinrichtung 8 und damit das Gegenstück 24 in Zugrichtung 15 bewegt werden, dann zieht das zweite Zugelement 7 über die Flächenpaarung der beiden Flächen 20, 22 das erste Zugelement 6 in Zugrichtung 15 mit und bewegt damit das Futtergehäuse 9 von der Stirnseite 3 des Gehäuses 2 weg. Damit wird ein Setzvorgang für einen Blindnietbefestiger durchgeführt.

Nach dem Setzvorgang wird das Futtergehäuse 9 wieder in seine Ausgangsstellung zurückbewegt. Hierbei wird die Bewegung von der Antriebseinrichtung 8 auf das erste Zugelement 6 über das elastische Element 23 übertragen.

Sollte sich jedoch in einem Zwischenraum 25 zwischen dem Futtergehäuse 9 und der Stirnseite 3 des Gehäuses 2 Schmutz angesammelt haben, die eine Bewegung des Futtergehäuses 9 in die in Fig. 1 dargestellte Ausgangsposition verhindert, dann kann das zweite Zugelement 7 zwar bis in die in Fig. 1 dargestellte Ausgangsposition bewegt werden. Die Bewegung des Futtergehäuses 9 kann jedoch früher gestoppt werden, weil das erste Zugelement 6 vom zweiten Zugelement 7, genauer gesagt der erste Absatz 19 vom zweiten Absatz 21, abheben kann. Hierbei wird das elastische Element 23 komprimiert. Das elastische Element 23 baut also Kräfte ab, die ansonsten das Gehäuse 2 zerstören könnten.

Wenn sich das Futtergehäuse 9 nicht mehr weit genug auf das Mundstück 4 zu bewegen kann, dann werden die Klemmbacken 10 auch nicht mehr in ausreichender Weise geöffnet. Dies merkt ein Benutzer des Blindnietsetzgeräts dadurch, dass er einen Zugdorn eines Blindnietbefestigers nur noch mit Schwierigkeiten oder gar nicht mehr in die Klemmbacken 10 einführen kann oder dass es entsprechend schwierig wird, einen Zugdorn aus dem Gehäuse 2 herauszuziehen. Der Benutzer kann dann das Gehäuse teilweise demontieren, um den Zwischenraum 25 frei zu legen und beispielsweise dort befindlichen Schmutz zu entfernen.

Da das elastische Element 23 komprimiert werden kann, ist die Länge der Zugeinrichtung variabel. Wenn die beiden Flächen 20, 22 aneinander liegen, dann hat die Zugeinrichtung eine erste Länge. Wenn die beiden Absätze 19, 21 relativ zueinander bewegt werden, so dass sich die beiden Flächen 20, 22 voneinander entfernen und das elastische Element 23 komprimiert wird, dann hat die Zugeinrichtung eine zweite Länge, die kürzer ist als die erste Länge. Nur dann, wenn die Zugeinrichtung die erste Länge aufweist, werden die Klemmbacken 10 durch das Mundstück 4 ausreichend geöffnet.

Die Kompression des elastischen Elements 23 und damit die Längenänderung kann klein sein. Sie liegt beispielsweise in einem Bereich von 1 bis 5 mm.

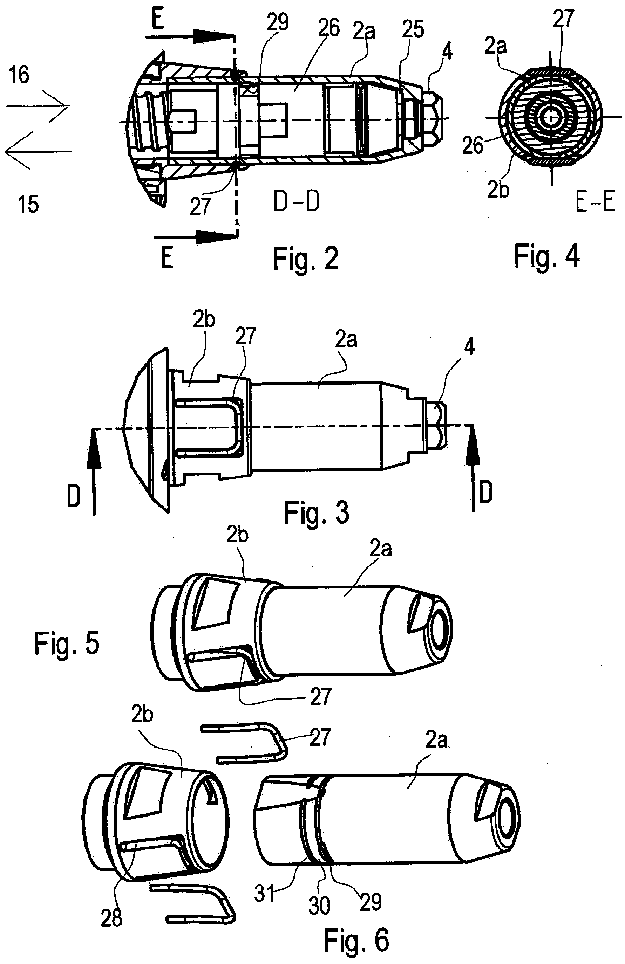

Eine weitere Lösung, die auch zusammen mit der in Fig. 1 dargestellten Lösung verwendet werden kann, ist in den Fig. 2 bis 6 dargestellt. Gleiche und einander entsprechende Elemente sind mit den gleichen Bezugszeichen versehen.

Die Zugeinrichtung 26 ist hier lediglich von außen dargestellt.

Das Gehäuse weist ein erstes Gehäuseteil 2a und ein zweites Gehäuseteil 2b auf. Das erste Gehäuseteil 2a ist teleskopierend in das zweite Gehäuseteil 2b eingesteckt. Ein Federelement 27 in Form eines U-förmig gebogenen Federbügels ist mit dem zweiten Gehäuseteil 2b verbunden, beispielsweise dadurch, dass es in eine entsprechend U-förmig ausgebildete Ausnehmung 28 eingelegt ist. Das Federelement 27 rastet dann, wenn das Blindnietsetzgerät 1 betriebsbereit ist, in eine am zweiten Gehäuseteil 2a ausgebildete erste Umfangsnut 29 ein. In diesem Fall hat das Gehäuse mit den beiden Gehäuseteilen 2a, 2b eine erste Länge.

Sollte sich bei der Rückstellbewegung der Zugeinrichtung 26 ein Problem ergeben, beispielsweise durch eine Ansammlung von Schmutz im Zwischenraum 25, dann wird das erste Gehäuseteil 2a durch die Zugeinrichtung 26 in Rückstellrichtung 16 aus dem ersten Gehäuseteil 2b herausgeschoben. Hierzu muss der Federbügel 27 aus der ersten Umfangsnut 29 radial nach außen herausgedrückt werden, wozu eine gewisse Kraft erforderlich ist. Diese Kraft ist größer als die Kraft der Druckfeder 11. Am ersten Gehäuseteil 2a kann eine zweite Umfangsnut 30 vorgesehen sein, in die das Federelement 27 wieder einrastet, nachdem das erste Gehäuseteil 2a aus dem zweiten Gehäuseteil 2b etwas herausgeschoben worden ist. Zwischen den beiden Umfangsnuten 29, 30 kann eine Markierung 31 vorgesehen sein, die einem Benutzer anzeigt, dass sich das zweite Gehäuseteil 2b gegenüber dem ersten Gehäuseteil 2a bewegt hat. Die Markierung zeigt dem Benutzer also an, dass eine Wartung erforderlich ist.

Das Federelement 27 bildet mit der ersten Umfangsnut 29 eine Rastverbindung, weil ein Querbügel des Federelements 24 in die erste Umfangsnut 29 einrasten kann, wenn das erste Gehäuseteil 2a weit genug in das zweite Gehäuseteil 2b eingeschoben wird. Auch hierzu ist eine gewisse Kraft erforderlich.

Das Federelement kann in nicht näher dargestellter Weise auch als Federbügel ausgebildet sein, der in radialer Richtung in das zweite Gehäuseteil 2b eingesteckt wird und dann in eine entsprechende Umfangsnut 29 am ersten Gehäuseteil 2a einrastet.

## Patentansprüche

1. Blindnietsetzgerät (1) mit einem Gehäuse (2; 2a; 2b), einer Zugeinrichtung (6, 7; 26), die zumindest teilweise in dem Gehäuse (2; 2a; 2b) angeordnet ist, und einem Antrieb (8), der in eine Zugrichtung (15) und in eine entgegengesetzt zur Zugrichtung (15) gerichtete Rückstellrichtung (16) auf die Zugeinrichtung (6, 7; 26) wirkt, **dadurch gekennzeichnet, dass** das Gehäuse (2a, 2b) und/oder die Zugeinrichtung (6, 7) in Rückstellrichtung (16) nach Überschreiten einer vorbestimmten Kraft zwischen einer ersten Länge und einer zweiten Länge veränderbar ist.

2. Blindnietsetzgerät nach Anspruch 1, **dadurch gekennzeichnet, dass** die Zugeinrichtung (6, 7) Klemmbacken (10) aufweist, die durch eine Druckfeder (11) in ein Futtergehäuse (9) hinein belastet sind.

3. Blindnietsetzgerät nach Anspruch 2, **dadurch gekennzeichnet, dass** das Gehäuse (2; 2a, 2b) ein Mundstück (4) aufweist, wobei die Klemmbacken (10) in einem Ruhezustand durch das Mundstück (4) in eine geöffnete Stellung verlagert sind, wenn die erste Länge vorliegt, und nicht in die geöffnete Stellung verlagert sind, wenn die zweite Länge vorliegt.

4. Blindnietsetzgerät nach einem der Ansprüche 1 bis 3, **dadurch gekennzeichnet, dass** ein Unterschied zwischen der ersten Länge und der zweiten Länge im Bereich von 1 bis 5 mm liegt.

5. Blindnietsetzgerät nach einem der Ansprüche 1 bis 4, **dadurch gekennzeichnet, dass** die Zugeinrichtung (6, 7) ein erstes Zugelement (6) und ein zweites Zugelement (7) aufweist, wobei das erste Zugelement (6) und das zweite Zugelement (7) in Zugrichtung formschlüssig in Eingriff stehen und in Rückstellrichtung ein elastisches Element (23) zwischen dem ersten Zugelement (6) und dem zweiten Zugelement (7) wirkt.

6. Blindnietsetzgerät nach Anspruch 5, **dadurch gekennzeichnet, dass** das elastische Element (23) als Wellfeder oder anderer elastomerer Körper ausgebildet ist.

7. Blindnietsetzgerät nach Anspruch 5 oder 6, **dadurch gekennzeichnet, dass** das erste Zugelement (6) einen ersten Absatz (19) mit einer senkrecht zur Zugrichtung gerichteten ersten Fläche (20) aufweist und das zweite Zugelement (7) einen zweiten Absatz (21) mit einer senkrecht zur Zugrichtung gerichteten zweiten Fläche (22) aufweist, wobei das elastische Element (23) die erste Fläche (20) und die zweite Fläche (22) gegeneinander belastet.

8. Blindnietsetzgerät nach einem der Ansprüche 1 bis 7, **dadurch gekennzeichnet, dass** das Gehäuse ein erstes Gehäuseteil (2a) und ein zweites Gehäuseteil (2b) aufweist, wobei das erste Gehäuseteil (2a) in Rückstellrichtung gegenüber dem zweiten Gehäuseteil (2b) verlagerbar ist.

9. Blindnietsetzgerät nach Anspruch 8, **dadurch gekennzeichnet, dass** eines der beiden Gehäuseteile (2a, 2b) eine Markierung (31) aufweist, die sichtbar ist, wenn die zweite Länge vorliegt, und nicht sichtbar ist, wenn die erste Länge vorliegt.

10. Blindnietsetzgerät nach Anspruch 9, **dadurch gekennzeichnet, dass** das erste Gehäuseteil (2a) und das zweite Gehäuseteil (2b) über eine Rastverbindung in Eingriff stehen.

11. Blindnietsetzgerät nach Anspruch 9 oder 10, **dadurch gekennzeichnet, dass** die Rastverbindung mindestens ein Federelement (27) aufweist, das mit einem der Gehäuseteile verbunden ist und mit dem anderen der Gehäuseteile kraftschlüssig in Eingriff steht.

12. Blindnietsetzgerät nach einem der Ansprüche 9 bis 11, **dadurch gekennzeichnet, dass** das Federelement (27) als Federbügel ausgebildet ist.

## Claims

1. Blind rivet setting device (1) comprising a housing (2, 2a, 2b), a pulling device (6, 7; 26) that is at least partially arranged in the housing (2, 2a, 2ab), and a drive (8) that acts on the pulling device (6, 7, 26) in a pulling direction (15) and in a reset direction (16) oriented opposite to the pulling direction (15), **characterized in that** a length of the housing (2) and/or of the pulling device (6, 7) is changeable from a first length to a second length when a predetermined force is exceeded.

2. Blind rivet setting device according to claim 1, **characterized in that** the pulling device (6, 7) comprises clamping jaws (10) loaded into a chuck housing (9) by a compression spring (11).

3. Blind rivet setting device according to claim 2, **characterized in that** the housing (2, 2a, 2b) comprises a nose piece (4), wherein in a resting state, the clamping jaws (10) are displaceable into an opened position by the nose piece (4) when the length is the first length and are not displaceable into the opened position when the length is the second length.

4. Blind rivet setting device according to any of claims 1 to 3, **characterized in that** a difference between the first length and the second length lies within the range of 1 to 5 mm.

5. Blind rivet setting device according to any of claims 1 to 4, **characterized in that** the pulling device (6, 7) comprises a first pulling element (6) and a second pulling element (7) wherein in a pulling-direction, the first pulling element (6) and the second pulling element (7) are positively engaged and, in the reset direction (16), an elastic element (23) acts between the first pulling element (6) and the second pulling element (7).

6. Blind rivet setting device according to claim 5, **characterized in that** the elastic element (23) is formed as one of a wave spring washer or other elastomeric body.

7. Blind rivet setting device according to claim 5 or 6, **characterized in that** the first pulling element (6) comprises a first step (19) with a first surface (20) directed crosswise to the pulling direction and the second pulling element (7) comprises a second step (21) with a second surface (22) directed crosswise to the pulling direction, wherein the elastic element (23) is arranged to load the first surface (20) and the second surface (22) against one another.

8. Blind rivet setting device according to any of claims 1 to 7, **characterized in that** the housing comprises a first housing part (2a) and a second housing part (2b) wherein in the reset direction, the first housing part (2a) is displaceable relative to the second housing part (2b).

9. Blind rivet setting device according to claim 8, **characterized in that** one of the first and second housing parts (2a, 2b) includes a marking (31) that is visible when the second length is present and not visible when the first length is present.

10. Blind rivet setting device according to claim 9, **characterized in that** the first housing part (2a) and the second housing (2) part are engageable via a locking connection.

11. Blind rivet setting device according to claim 9 or 10, **characterized in that** the locking connection comprises at least one spring element (27) that is connected to one of the first and second housing parts and engaged with the other of the first and second housing parts in a non-positive fit.

12. Blind rivet setting device according to any of claims 9 to 11, **characterized in that** the spring element is embodied as a spring clip.

## Revendications

1. Appareil de pose de rivet aveugle (1) avec un boîtier (2 ; 2a; 2b), un dispositif de traction (6, 7 ; 26), qui est au moins partiellement disposé dans le boîtier (2 ; 2a ; 2b) et un dispositif d'entraînement (8) qui agit dans une direction de traction (15) et une direction de retour (16), opposée à la direction de traction (15), sur le dispositif de traction (6, 7 ; 26), **caractérisé en ce que** le boîtier (2a, 2b) et/ou le dispositif de traction (6, 7) dans la direction de retour (16) après le dépassement d'une force prédéterminée peut être modifié entre une première longueur et une deuxième longueur.

2. Appareil de pose de rivet aveugle selon la revendication 1, **caractérisé en ce que** le dispositif de traction (6, 7) comprend des mâchoires de serrage (10) qui sont alimentées par un ressort de compression (11) à l'intérieur d'un boîtier de chemisage (9).

3. Appareil de pose de rivet aveugle selon la revendication 2, **caractérisé en ce que** le boîtier (2 ; 2a, 2b) comprend un embout (4), les mâchoires de serrage (10) étant déplacées, dans un état de repos, par l'embout (4), vers une position ouverte lorsque la première longueur est atteinte et ne sont pas déplacées vers la position ouverte lorsque la deuxième longueur est atteinte.

4. Appareil de pose de rivet aveugle selon l'une des revendications 1 à 3, **caractérisé en ce qu'**une différence entre la première longueur et la deuxième longueur est de l'ordre de 1 à 5 mm.

5. Appareil de pose de rivet aveugle selon l'une des revendications 1 à 4, **caractérisé en ce que** le dispositif de traction (6, 7) comprend un premier élément de traction (6) et un deuxième élément de traction (7), le premier élément de traction (6) et le deuxième élément de traction (7) étant emboîtés entre eux par complémentarité de forme et un élément élastique (23) agissant, dans la direction de retour, entre le premier élément de traction (6) et le deuxième élément de traction (7).

6. Appareil de pose de rivet aveugle selon la revendication 5, **caractérisé en ce que** l'élément élastique (23) est conçu comme un ressort ondulé ou comme un autre corps élastomère.

7. Appareil de pose de rivet aveugle selon la revendication 5 ou 6, **caractérisé en ce que** le premier élément de traction (6) comprend un premier épaulement (19) avec une première surface (20) orientée perpendiculairement par rapport à la direction de traction et le deuxième élément de traction (7) comprend un deuxième épaulement (21) avec une deuxième surface (22) orientée perpendiculairement par rapport à la direction de traction, l'élément élastique (23) sollicitant la première surface (20) et la deuxième surface (22) l'une contre l'autre.

8. Appareil de pose de rivet aveugle selon l'une des revendications 1 à 7, **caractérisé en ce que** le boîtier comprend une première partie de boîtier (2a) et une deuxième partie de boîtier (2b), la première partie de boîtier (2a) pouvant être déplacée dans la direction de retour par rapport à la deuxième partie de boîtier (2b).

9. Appareil de pose de rivet aveugle selon la revendication 8, **caractérisé en ce qu'**une des deux parties de boîtier (2a, 2b) comprend un marquage (31) qui est visible lorsque la deuxième longueur est atteinte et n'est pas visible lorsque la première longueur est atteinte.

10. Appareil de pose de rivet aveugle selon la revendication 9, **caractérisé en ce que** la première partie de boîtier (2a) et la deuxième partie de boîtier (2b) sont emboîtées par l'intermédiaire d'une liaison par encliquetage.

11. Appareil de pose de rivet aveugle selon la revendication 9 ou 10, **caractérisé en ce que** la liaison par encliquetage comprend au moins un élément à ressort (27) qui est relié avec une des parties de boîtier et est emboîté avec l'autre partie de boîtier par friction.

12. Appareil de pose de rivet aveugle selon l'une des revendications 9 à 11, **caractérisé en ce que** l'élément à ressort (27) est conçu comme un étrier élastique.
